# EUROPÄISCHE PATENTANMELDUNG

(11) **EP 0 945 257 A2**
(43) Veröffentlichungstag der Anmeldung: **29.09.1999**
(21) Anmeldenummer: 99105340.6
(22) Anmeldetag: 16.03.1999
(51) Int. Cl.: B32B 27/36, B65D 65/40

(54) **Polyesterfolie mit hoher Sauerstoffbarriere und verbesserter Haftung zu Metallschichten, Verfahren zu ihrer Herstellung und ihre Verwendung**

(30) Priorität: 25.03.1998 DE 19813270
(71) Anmelder: Mitsubishi Polyester Film GmbH, 65203 Wiesbaden (DE)
(72) Erfinder: Peiffer, Herbert, Dr., 55126 Mainz (DE); Bennett, Cynthia, Dr., 55232 Alzey (DE); Crass, Günther, Dipl.-Ing., 65232 Taunusstein-Wehen (DE); Hilkert, Gottfried, Dr., 55291 Saulheim (DE); Roth, Werner, Dr., 65817 Eppstein (DE)
(74) Vertreter: Schweitzer, Klaus, Dr.

(57) **Zusammenfassung**

Offenbart ist eine transparente, biaxial orientierte Polyesterfolie mit einer Basisschicht, die zu mindestens 80 Gew.-% aus einem thermoplastischen Polyester besteht, und mindestens einer Deckschicht, wobei die Deckschicht aus einem Coolymer oder einem Gemisch von Polymeren besteht, das mindestens 35 Mol-% Ethylen-2,6-naphthalat-Einheiten enthält, bis zu 44 Mol-% an Ethylen-terephthalat-Einheiten, und 1 bis 20 Mol-% Ethylenisophthalat-Einheiten sowie bis zu 20 Mol-% einer sulfosubstituierten Dicarbonsäure und ggf. bis zu 10 Mol-% an Einheiten aus cycloaliphatischen oder aromatischen Diolen und/oder Dicarbonsäuren (jeweils bezogen auf den esamten Dicarbonsäure- oder Diolgehalt) enthält.

## Beschreibung

Die Erfindung betrifft eine transparente, biaxial orientierte Polyesterfolie mit einer Basisschicht, die zu mindestens 80 Gew.-% aus einem thermoplastischen Polyester besteht, und mindestens einer Deckschicht. Die Erfindung betrifft weiterhin ein Verfahren zur Herstellung der Folie und ihre Verwendung.

In vielen Fällen wird bei Lebensmittelverpackungen eine hohe Sperrwirkung gegenüber Gasen, Wasserdampf und Aromastoffen verlangt. Üblicherweise werden deshalb metallisierte oder mit Polyvinylidenchlorid (PVDC) beschichtete Polypropylenfolien verwendet. Metallisiete Polypropylenfolien haben eine mäßige Sauerstoffbarriere ohne besondere Vorbehandlung und weisen eine schlechte Haftung zwischen der Metallschicht und der Polypropylenschicht auf. Daher kann die Metallschicht unter Verlust der Barrierewirkung leicht verletzt (Kratzer) werden. Metallisierte Polyestertolien haben generell eine wesentlich bessere Barrierewirkung gegenüber z.B. Sauerstoff, und auch eine etwas bessere Metallhaftung als unbehandelte Polypropylenfolien, aber auch bei metallisierter Polyesterfolie besteht die Gefahr einer Metallschichtverletzung. Eine PVDC-Schicht bringt auch eine Barrierewirkung, aber solche Schichten müssen in einem zweiten Arbeitsgang aus einer Lösung aufgebracht werden, was die Verpackung erheblich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Einige Rohstoffe sind zudem für die Herstellung von Lebensmittelverpackungen ungeeignet bzw. nicht amtlich zugelassen.

Aufgabe der vorliegenden Erfindung ist es deshalb, eine biaxial orientierte Polyesterfolie zur Verfügung zu stellen, die sich einfach und wirtschaftlich herstellen läßt, die guten physikalischen Eigenschaften der bekannten Folien besitzt, eine gute Haftung zu einer im Metallisierungsverfahren aufgebrachten Schicht besitzt und keine Entsorgungsprobleme verursacht.

Gelöst wird die Aufgabe durch eine biaxial orientierte Polyesterfolie mit einer Basisschicht, die zu mindestens 80 Gew.-% aus (mindestens) einem thermoplastischen Polyester besteht und mindestens einer Deckschicht, wobei die Folie dadurch gekennzeichnet ist, daß die Deckschicht(en) aus einem Copolyester besteht/bestehen, der/die aus Dicarbonsäuren und Diolen oder deren Derivaten hergestellt wird, wobei die Dicarbonsäure-Komponente aus einem Gemisch aus mindestens 35 Mol-% 2,6-Naphthalindicarbonsäure, bis zu 44 Mol-% Terephthalsäure, 1 bis 20 Mol-% Isophthalsäure und 0 bis 20 Mol-% einer aromatischen Dicarbonsäure, die mit einer Alkalisulfogruppe substituiert ist.

Bevorzugt ist eine Polyesterfolie, in der die Polymere der Deckschicht mindestens 60 Mol-% an Ethylen-2,6-naphthalat-Einheiten, 1-10 Mol-% an Isophalat-Einheiten und bis zu 30 Mol-% an Ethylen-terephthalat-Einheiten enthalten. Davon ist wiederum eine solche Polyesterfolie besonders bevorzugt, in der die Polymere der Deckschicht mindestens 65 Gew.-% an Ethylen-2,6-naphthalat-Einheiten und bis zu 25 Gew.-% an Ethylen-terephthalat-Einheiten enthalten.

Als alkalisulfosubstituierte Dicarbonsäuren werden solche Monomere verstanden, die der allgemeinen Formel entsprechen:

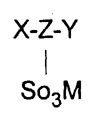

In dieser Formel ist
- M: ein einwertiges Kation eines Alkalimetalls,
- Z: ein dreiwertiger aromatischer Rest, und
- X und Y: sind Carboxylgruppen oder polyesterbildende Äquivalente.

Beispiele solcher Monomeren sind Natrium-sulfoterephthalsäure, Natrirnm-5-sulfoisophthalsäure, Natrium-sulfophthalsäure, 5-(p-Natriumsulfophenoxyisophthalsäure, 5-(Natriumsulfopropoxy)-isophthalsäure und dergleichen Monomere, sowie deren zur Bildung von Polyester befähigte Derivate, wie z.B. die Dimethylester. M ist vorzugsweise Na⁺, Li⁺ oder K⁺.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Als weitere Komponenten der aromatischen Dicarbonsäure-Mischung sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacerylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Gegenstand der vorliegenden Erfindung ist auch ein Verfahren zur Herstellung dieser Folie. Es umfaßt das
a) Herstellen einer Folie aus Basis- und Deckschicht(en) durch Coextrusion,
b) biaxiale Verstrecken der Folie und
c) Thermofixieren der verstreckten Folie.

Zur Herstellung der Deckschicht werden zweckmäßig Granulate aus Polyethylenterephthalat und Polyethylen-2,6-naphthalat (wobei einer der beiden mit der benötigten Menge Isophtalat modifiziert ist) im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und vertestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclo-hexandimethylenterephthalat, PCDT) sowie aus Ethylenglykol, Naphthalin-2,6-dicarbonsäure und Biphenyl-4,4'-dicarbonsäure (= Polyethylen-2,6-naphthalat-bibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH, wobei n eine ganze Zahl von 3 bis 6 darstellt, verzweigte aliphatische Glykole mit bis zu 6 Kohlenstoff-Atomen, aromatische Diole der allgemeinen Formel HO-C₆H₄-X-C₆H₄-OH, wobei X für -CH -₂ -C(CH )₃-₂ -C(CF₃)₂-, -O-, -S- oder -SO₂- steht, oder Bisphenole der allgemeinen Formel HO-C₆H₄-C₆H₄-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktverestetungsverfahren in Gegenwart von Polykondensationskatalysatoren erfolgen. Dabei geht man direkt von den Dicarbonsäuren und den Diolen aus. Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymers und korreliert mit der Schmelzviskosität. Je nach chemischer Zusammensetzung des verwendeten Polymers ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 800, insbesondere zwischen 500 und 700. Falls erwünscht, kann an den jeweiligen Granulaten eine Festphasenkondensation durchgeführt werden, um die benötigten Schmelzviskositäten der Materialien einzustellen. Allgemein gilt, daß sich die Schmelzviskositäten der Polymerschmelzen für Basis- und Deckschicht(en) um nicht mehr als den Faktor 5, vorzugsweise den Faktor 2 bis 3, unterscheiden sollten.

Die Polymere für die Deckschicht können auf 3 verschiedene Weisen hergestellt werden:
a) Bei der gemeinsamen Polykondensation werden Terephthalsäure, Isophthalsäure, Naphthalin-2,6-dicarbonsäure und ggf. die alkalisulfosubstituierte Dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET), Polyethylen-2,6-naphthalat (PEN) und Polyethylenisophthalat ggf. modifiziert mit alkalisulfosubstituierten Dicarbonsäuren werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET, PEN und Polyethylenisophthalat, ggf. modifiziert mit alkalisulfosubstituierten Dicarbonsäuren werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten.

In einer weiteren Ausführungsform umfaßt die Folie auf der der Deckschicht abgewandten Seite eine weitere Deckschicht aus Polyethylenterephthalat, die Pigmente enthält.

Die erfindungsgemäße Folie zeigt eine überraschend hohe Sauerstoffbarriere. Werden dagegen für die Deckschicht(en) Polymere verwendet, die weniger als 35 Mol-% Ethylen-2,6-naphthalat-Einheiten und mehr als 44 Mol-% Ethylenterephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 25 bis 35 Mol-% Ethylen-2,6-naphthalat-Einheiten und 65 bis 75 Mol-% Ethylenterephthalat-Einheiten enthält. Selbst unter diesen Umständen kann jedoch eine Folie mit einer Deckschicht, die zwischen 5 und 35 Mol-% Ethylen-2,6-naphthalat-Einheiten und mehr als 45 Mol-% Ethylen-terephthalat-Einheiten enthält vorteilhaft sein, wenn die Sauerstoffbarriere für die betreffende Anwendung keine entscheidende Rolle spielt.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumcarbonat, Bariumsulfat, Lithiumphosphat, Calciumphosphat, Magnesiumphosphat, Aluminiumoxid, LiF, Calcium-, Barium, Zink- oder Mangan-Salze der eingesetzten Dicarbonsäuren, Ruß, Titandioxid, Kaolin oder vernetzte Polystyroloder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wäßriger Dispersionen vor der Querverstreckung auf die Folie aufzubringen.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erlindungsgemäßen Folie bleiben im wesentlichen unverändert oder sind sogar verbessert. Daneben ist bei der Herstellung der Folie gewährleistet, daß das Regenerat in einem Anteil von bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln. Üblicherweise werden für diesen Einsatzzweck die Folien metallisiert oder keramisch (z.B. SiOₓ, AlₓO_{y}` Na₂SiO₄, etc.) beschichtet. Überraschenderweise hat sich gezeigt, daß die Barrierewirkung wesentlich besser als bei herkömmlichen metallisierten oder keramisch beschichteten Polyesterfolien ist, wenn man die Metall- bzw. Keramikschicht auf die PEN-haltige Deckschicht der erfindungsgemäßen Folie aufbringt. Herkömmliche metallisierte Polyesterfolien zeigen Barrierewerte von > 0.6 cm³/m²·d·bar, wobei die metallisierten erfindungsgemäßen Folien Barrierewerte von < 0.1 cm³/m²·d·bar aufweisen. Generell hat sich gezeigt, daß - unabhängig von der Art der Beschichtung - die Barrierewirkung der erfindungsgemäßen Folien um den Faktor 10 besser ist als die herkömmlicher Polyesterfolien.

Hierbei hat sich gezeigt, daß auch schon geringe Deckschichtendicken von <1,5 µm, vorzugsweise < 1,0 µm ausreichen, um die genannten guten Barrierewirkungen hervorzurufen.

Weitere Anwendungsgebiete für die erfindungsgemäßen Folien sind Dosenbeschichtungen (Can-Liner), Deckelfolien (z.B. Deckel für Yoghurtbecher, etc.) und TTR-Bänder (Thermo Transfer Ribbon).

Zur Charakterisierung der Rohstoffe und der Folien wurden die folgenden Methoden benutzt:

Die Messung der Sauerstoffbarriere erfolgte mit einem OX-TRAN 2/20 von Mocon Modern Controls (USA) entsprechend DIN 53 380, Teil 3. Ein Barrierewert von < 2 cm³/m²·d·bar wird als gut beurteilt.

Die Metallhaftung auf den Folien wurde bewertet, indem an jeder untersuchten Probe die metallisierte Oberfläche mit einem Baumwollvlies mit der gleichen Anzahl Strichen und etwa dem gleichen Druck überrieben wurde. Ließ sich das Metall leicht (bei geringem Druck) entfernen, wurde die Haftung als schlecht beurteilt.

Zur Bestimmung des SV-Wertes (SV = solution viscosity) wurde eine Polyester-Probe in einem Lösungsmittel (Dichloressigsäure, Konzentration: 1 Gew.-%) gelöst. Die Viskosität dieser Lösung sowie die Viskosität des reinen Lösungsmittels wurden in einem Ubbelohde-Viskosimeter gemessen. Aus den beiden Werten wurde der Quotient (= relative Viskosität, ηᵣₑₗ) ermittelt, davon 1,000 abgezogen und dieser Wert mit 1000 multipliziert. Das Resultat war der SV-Wert ( 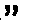 solution viscosity").

Die Reibung wurde nach DIN 53375 bestimmt. Die Gleitreibungszahl wurde 14 Tage nach der Produktion gemessen.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

### Beispiel 1

Das Polymer für die Deckschicht wurde durch gemeinsame Polykondensation hergestellt. Dazu wurden Dimethylterephthalat, Naphthalin-2,6-dicarbonsäure-dimethylester, Isophthalsäure und 5-Sulfoisophthalsäure-Natriumsalz in einem Reaktor im Molverhältnis 0,15:0,75:0,05:0,05 gemischt und mit Ethyenglykol und 300 ppm Manganacetat als Katalysator versetzt. Bei einer Temperatur von 160 bis 250 °C und bei Atmosphärendruck wurde unter Rühren die Umesterung durchgeführt. Das dabei entstehende Methanol wurde abdestilliert. Anschließend wurde eine zum Mangan äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert. Der SV-Wert betrug 550.

### Beispiel 2

In ähnlicher Weise wie Beispiel 1 wurde ein Copolymer aus 20 Mol-% Dimethylterephthalat, 75 Mol-% Dimethyl-2,6-naphthalat und 5 Mol-% Isophthalsäure mit Ethylenglykol hergestellt. Der SV-Wert betrug 600.

### Beispiel 3

In ähnlicher Weise wie Beispiel 1 wurde ein Copolymer aus 98 Mol-% Dimethyl-2,6-naphthalat, 2 Mol-% Isophthalsäure und 2 Mol-% 5-Sulfoisophthalsäurenatriumsalz mit Ethylenglykol hergestellt. Der SV-Wert betrug 650.

### Beispiel 4

Chips aus Polyethylenterephthalat wurden bei 160 °C auf eine Restfeuchte von weniger als 50 ppm getrocknet und dem Extruder für die Basisschicht zugeführt. Daneben wurden Chips aus Beispiel 1 ebenfalls bei 160 °C auf eine Restfeuchte von 50 ppm getrocknet und dem Extruder für die Deckschicht zugeführt. Die Schmelzen wurden filtriert und in einer Mehrschichtdüse zu einem zweischichtigen Flachfilm ausgeformt, über die Düsenlippe ausgestoßen und auf einer Kühlwalze verfestigt.

Durch anschließende stufenweise Orientierung in Längs- und Querrichtung wurde dann eine transparente zweischichtige Folie mit einer Gesamtdicke von 12 µm hergestellt. Die Deckschicht hatte eine Dicke von 2,0 µm.

| Basisschicht: | |
|---|---|
| 95 Gew.-% | Polyethylenterephthalat (RT 49 von Hoechst AG) mit einem SV-Wert von 800 und |
| 5 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 um. |

| Deckschicht: | Polymer aus Beispiel 1 |
|---|---|
| 75 Mol-% | Ethylen-2,6-Naphthalat-Einheiten |
| 15 Mol-% | Ethylenterephthalat-Einheiten |
| 5 Mol-% | Ethylenisophthalat-Einheiten |
| 5 Mol-% | Ethylen-5-Sulfoisophthalat-Natriumsalz-Einheiten |

Die einzelnen Verfahrensschritte waren:

| | | | |
|---|---|---|---|
| Extrusion | Temperaturen: | Deckschicht: | 300 °C |
| | | Basisschicht: | 300 °C |
| | Temperatur der Abzugswalze: | | 30 °C |
| | Düsenspaltweite: | | 1 mm |
| | Temperatur der Abzugswalze: | | 30 °C |
| Längsstreckung | Temperatur: | | 85-135 °C |
| | Längsstreckverhältnis: | | 4,0: 1 |
| Querstreckung | Temperatur: | | 85-135 °C |
| | Querstreckverhältnis: | | 4,0: 1 |
| Fixierung | Temperatur: | | 230 °C |

Die Deckschicht der Folie wurde in einem separaten Arbeitsschritt in einem Metallisierer in Vakuum bedampft. Die Beschichtungsgeschwindigkeit betrugt 5 m/s.

Nach der Metallisierung hatte die Folie die geforderte Sauerstoffbarriere.

### Beispiel 5

Analog zu Beispiel 4 wurde durch Coextrusion eine dreischichtige Folie mit einer Gesamtdicke von 12 um hergestellt. Die Deckschicht A hatte eine Dicke von 2,0 µm, die Deckschicht C von 1,5 µm. Die Verfahrensbedingungen waren für alle Schichten wie im Beispiel 4. Nach der Metallisierung hatte die Folie die geforderte Barriere. Auch diese Folie wurde auf der Deckschicht A metallisiert.

| Basisschicht: | |
|---|---|
| 100 Gew.-% | Polyethylenterephthalat mit einem SV-Wert von 800 |

| Deckschicht A: | Copolymer aus Beispiel 2 |
|---|---|
| 75 Mol-% | Ethylen-2,6-naphthalat-Einheiten |
| 20 Mol-% | Ethylenterephthalat-Einheiten |
| 5 Mol-% | Ethylenisophthalat-Einheiten |
| Deckschicht C: | Copolymer aus Beispiel 2 |

### Beispiel 6

Analog Beispiel 5 wurde eine weitere dreischichtige Folie hergestellt. Die Deckschichten waren jeweils 1 µm dick. Die Deckschicht A wurde metallisiert.

| Basisschicht: | Polyethylenterephthalat mit einem SV-Wert von 800 |
|---|---|
| Deckschicht A: | Copolymer aus Beispiel 3: |
| 98 Mol-% | Ethylen-2,6-naphthalat-Einheiten |
| 2 Mol-% | Ethylen-Isophthalat-Einheiten |
| 2 Mol-% | Ethylen-5-Sulfoisophthalat-Natriumsalz-Einheiten |

| Deckschicht C: | |
|---|---|
| 90 Gew.-% | Copolymer aus Beispiel 2 |
| 10 Gew.-% | Masterbatch aus 99 Gew.-% Polyethylenterephthalat und 1 Gew.-% Kieselsäurepartikel mit einer mittleren Teilchengröße von 1.0 µm. |

Nach der Metallisierung hatte die Folie die gewünschte Barriere.

### Vergleichsbeispiel V1

Eine herkömmliche industriell gefertigte biaxial orientierte Folie aus Polyethylenterephthalat wurde ohne besondere Vorbehandlung metallisiert.

Die Eigenschaften der Folien aus den Beispielen 4 bis 6 sowie V1 und V2 werden in Tabelle 1 zusammengestellt.

**Tabelle 1**

| Beispiel | Barriere direkt nach Metallisierung | Metallhaftung | Barrie nach Metallhaftungstest |
|---|---|---|---|
| 4 | gut | gut | gut |
| 5 | gut | gut | gut |
| 6 | gut | gut | gut |
| V1 | gut | schlecht | schlecht |

## Patentansprüche

1. Biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Coolymer oder einem Gemisch von Polymeren besteht, das mindestens 35 Mol-% Ethylen-2,6-naphthalat-Einheiten enthält, bis zu 44 Mol-% an Ethylen-terephthalat-Einheiten, und 1 bis 20 Mol-% Ethylenisophthalat-Einheiten sowie bis zu 20 Mol-% einer sulfosubstituierten Dicarbonsäure und ggf. bis zu 10 Mol-% an Einheiten aus cycloaliphatischen oder aromatischen Diolen und/oder Dicarbonsäuren (jeweils bezogen auf den gesamten Dicarbonsäure- oder Diolgehalt) enthält.

2. Folie gemäß Anspruch 1, dadurch gekennzeichnet, daß die Deckschicht mindestens 70 Mol-%, bevorzugt mindestens 75 Mol-%, an Ethylen-2,6-naphthalat-Einheiten enthält.

3. Folie gemäß einem oder mehreren der Ansprüche 1 bis 2, dadurch gekennzeichnet, daß die Deckschicht eine Dicke von 0,2 bis 6 µm, vorzugsweise von 0,3 bis 5,5 µm, besonders bevorzugt von 0,3 bis 5,0 µm, aufweist.

4. Folie gemäß einem oder mehreren der Ansprüche 1 bis 3, dadurch gekennzeichnet, daß sie zweischichtig ist und aus der Basisschicht und der Deckschicht besteht.

5. Folie gemäß einem oder mehreren der Ansprüche 1 bis 3, dadurch gekennzeichnet, daß sie dreischichtig ist und aus der Basisschicht und je einer Deckschicht auf beiden Seiten der Basisschicht besteht.

6. Folie gemäß einem oder mehreren der Ansprüche 1 bis 5, dadurch gekennzeichnet, daß mindestens eine der Deckschichten pigmentiert ist.

7. Folie gemäß einem oder mehreren der Ansprüche 1 bis 6, dadurch gekennzeichnet, daß sie auf mindestens einer Seite mit einer Corona behandelt ist.

8. Folie gemäß einem oder mehreren der Ansprüche 1 bis 7, dadurch gekennzeichnet, daß sie auf mindestens einer Seite in-line beschichtet ist.

9. Verfahren zur Herstellung der Folie nach einem oder mehreren der Ansprüche 1 bis 8, umfassend die Schritte
a) Herstellen einer Folie aus Basis- und Deckschicht(en) durch Coextrusion,
b) biaxiales Verstrecken der Folie und
c) Thermofixieren der verstreckten Folie.

10. Verwendung der Folie nach einem oder mehreren der Ansprüche 1 bis 9 zum Verpacken von Nahrungs- und Genußmitteln.
